# EUROPÄISCHE PATENTSCHRIFT

(11) **EP 0 641 065 B1**
(45) Veröffentlichungstag und Bekanntmachung des Hinweises auf die Patenterteilung: **26.11.1997**
(21) Anmeldenummer: 94109377.5
(22) Anmeldetag: 17.06.1994
(51) Int. Cl.: H02M 3/337, B64G 1/42

(54) **Gegentaktwandler mit Vorregler**
Push-pull converter with preregulator
Convertisseur push-pull avec prérégulateur

(30) Priorität: 25.08.1993 DE 4328556
(43) Veröffentlichungstag der Anmeldung: 01.03.1995
(73) Patentinhaber: ROBERT BOSCH GMBH, 70442 Stuttgart (DE)
(72) Erfinder: Ohms, Franz, D-74420 Oberrot (DE)

(56) Entgegenhaltungen:
- DE-A- 4 120 147
- DE-A- 4 123 634
- US-A- 5 218 522

## Beschreibung

Die Erfindung geht aus von einer Anordnung gemäß dem Oberbegriff des Patentanspruchs 1. Solche Anordnungen sind bekannt aus DE 41 20 147 C2, DE 41 23 634 A1 oder aus WO 92/2 955 A1.

Wird ein Gegentaktwandler als Resonanzwandler ausgebildet mit einem Resonanzkondensator in jedem Gegentaktzweig und einer eingangsseitigen galvanischen Verbindung der Gegentaktzweige, so können Ausgleichsströme fließen, die insbesondere die Ausgangsinduktivität des Vorreglers belasten und so zu einer verminderten Regelreserve führen, bzw. den Wirkungsgrad absenken. Bei der DE 41 23 634 A1 sind die Ausgangsinduktivitäten des Vorreglers (Hochsetzstellers) so mit den Gegentaktzweigen des Gegentaktwandlers verbunden, daß eine Entkopplung eintritt.

Aufgabe vorliegender Erfindung ist es eine Anordnung aufzuzeigen, die diese zuvor aufgeführten Nachteile nicht aufweist und die insbesondere einen hohen Wirkungsgrad besitzt. Diese Aufgabe wird durch die Merkmale des Anspruchs 1 gelöst. Die weiteren Ansprüche betreffen vorteilhafte Ausgestaltungen dieser Anordnung. Die Ausgestaltung nach Anspruch 3 erlaubt es die resultierende Kapazität des Gegentaktresonanzwandlers größer zu wählen als bei herkömmlichen Resonanzwandlern. Der Transformator des Gegentaktwandlers wird besser ausgenutzt, so daß bei gleicher vorgegebener Leistung das Bauvolumen reduziert werden kann. Störsignale können im Regelzweig einfach kompensiert werden. Die Maßnahmen der Ansprüche 4 und 5 verhindern unerwünschte Schwingerscheinungen bei bestimmten Betriebsarten. Mit den Maßnahmen nach Anspruch 5 kann darüber hinaus ein zusätzlicher Verbraucher, z. B. der Heizkreis einer Wanderfeldröhre oder eine Regelschaltung, ohne Zusatzaufwand und ohne störenden Einfluß auf den Gegentaktwandler versorgt werden.

Anhand der Zeichnungen werden nun Ausführungsbeispiele der Erfindung näher erläutert. Es zeigen:
Fig. 1 ein Prinzipschaltbild einer Anordnung gemäß der Erfindung,
Fig. 2 das Schaltspiel der Gegentaktschalter,
Fig. 3 ein Ersatzschaltbild für einen Gegentaktzweig,
Fig. 4 ein Ausführungsbeispiel mit einem Hochsetzsteller als Vorregler,
Fig. 5 die Ankopplung der Gegentaktwicklungen über die Ausgangsinduktivitäten eines Tiefsetzstellers,
Fig. 6 die Ankopplung der Gegentaktwicklungen über die Ausgangsinduktivitäten eines Hochsetzstellers,
Fig. 7 ein Ausführungsbeispiel mit Bedämpfung der Gegentaktwicklungen,
Fig. 8 ein Ausführungsbeispiel mit einem Ausgang für einen Nebenkreis und
Fig. 9 ein über Gegentaktwicklungen angekoppelter Nebenkreis.

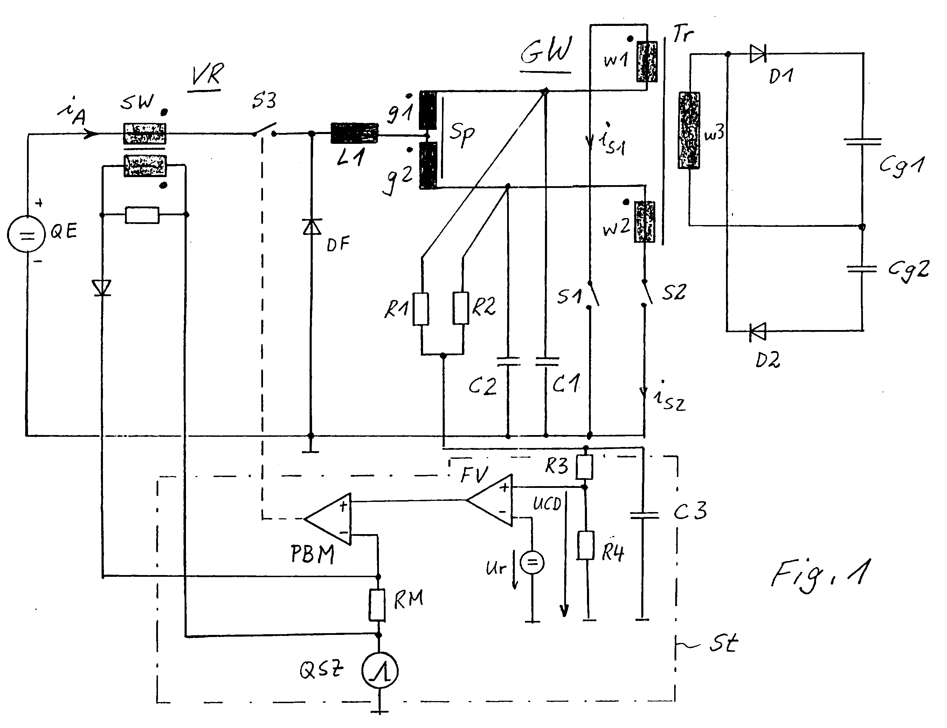

In Figur 1 ist ein von einer Eingangsgleichspannungsquelle QE gespeister Vorregler VR in Form eines Tiefsetzstellers-Buckregler - dargestellt, dem ein Parallel-Gegentaktgleichspannungswandler GW nachgeschaltet ist. Der Tiefsetzsteller umfaßt ein Stellglied im Längszweig, hier durch den Schalter S3 symbolisiert, und eine Freilaufdiode DF. Die Ausgangsinduktivität L1 des Tiefsetzstellers im Längszweig ist erfindungsgemäß über jeweils eine Gegentaktwicklung g1, g2 eines Spartransformators Sp mit einem der Gegentaktzweige des Gegentaktwandlers GW verbunden. Im gezeigten Ausführungsbeispiel führt das ausgangsseitige Ende der Induktivität L1 zum Mittelanschluß des Spartransformators Sp. Die Wicklungsenden der Wicklungen g1 und g2 des Spartransformators Sp führen jeweils zu einem Gegentaktzweig. Der Gegentaktwandler GW umfaßt einen Leistungstransformator Tr mit zwei voneinander galvanisch getrennten Primärwicklungen w1 und w2 und einer Sekundärwicklung w3. Im Ausgangskreis des Gegentaktwandlers GW sind zwei Gleichrichterkreise mit Dioden D1, D2 und Glättungskondensatoren Cg1 und Cg2 dargestellt. Die beiden Gegentaktschalter S1 und S2 des Gegentaktwandlers sind jeweils in Serie zu einer der Primärwicklungen w1 bzw. w2 angeordnet, welche wiederum in Serie zu jeweils einer der Gegentaktwicklungen g1 und g2 angeordnet sind. Der Wicklungssinn der Primärwicklungen w1 und w2 ist ein Figur 1 durch Punkte markiert. Zur Ausbildung des Gegentaktwandlers als Resonanzwandler sind wie bei der DE 41 20 147 C2 zwei Resonanzkondensatoren C1, C2 vorgesehen. Diese Resonanzkondensatoren C1, C2 sind jeweils an die Verbindungsleitung zwischen den Gegentaktwicklungen g1, g2 und einer Primärwicklung w1; w2 einerseits und an den primärwicklungsfernen Zusammenschaltpunkt der beiden Gegentaktschalter S1 und S2 angeschlossen. Somit liegen die Resonanzkondensatoren C1 und C2 jeweils parallel zur Serienschaltung eines Gegentaktschalters und einer Primärwicklung. Die Resonanzkondensatoren können auch an anderer Stelle in den Gegentaktzweig angeordnet werden, beispielsweise in Serie zu den Primärwicklungen und/oder in mindestens einem der Ausgangskreise.

Die Gegentaktzweige sind eingangsseitig wechselstrommäßig mittels der Gegentaktwicklungen g1 und g2 voneinander entkoppelt. Auf diese Weise beeinflussen sich die Gegentaktzweige nicht in ihrem Resonanzverhalten, welches insbesondere durch den jeweiligen Resonanzkondensator C1 bzw. C2 und durch die Induktivität des Transformators - hauptsächlich dessen Streuinduktivität - festgelegt ist.

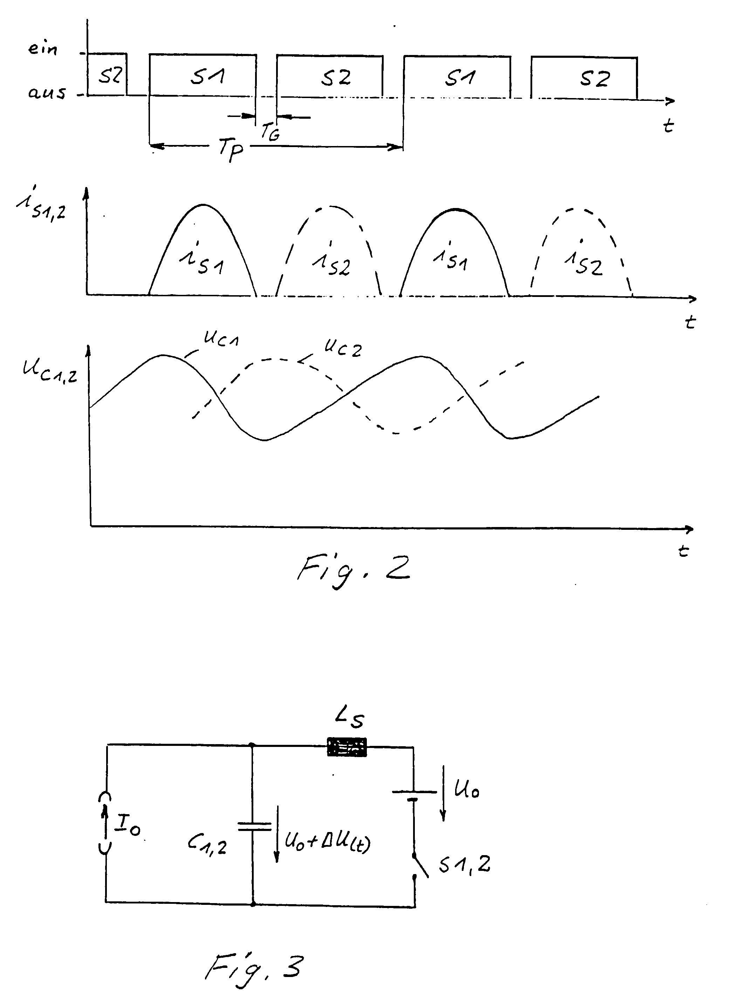

Das Schaltspiel der Gegentaktschalter S1 und S2 zeigt Figur 2 erste Zeile. Während einer Periodendauer Tp werden die Schalter S1 und S2 abwechselnd eingeschaltet. Während einer Lückzeit T_{G} sind beide Schalter stromlos. Diese Lückzeit T_{G} wird vorzugsweise so gewählt, daß in dieser Zeit das Resonanzgebilde in Form des Gegentaktwandlers gegebenenfalls unter Einbeziehung von parasitären Wicklungskapazitäten oder Gleichrichterkapazitäten umschwingen kann. Zur Aufbereitung der Steuersignale für die Schalter S1 und S2 unter Berücksichtigung der Lückzeit T_{G} kann eine Steuereinrichtung gemäß der EP 77 958 B1 verwendet werden. Die Ströme iₛ₁ und iₛ₂ in den primärseitigen Gegentaktzweigen sind in Figur 2, Zeile 2 dargestellt (iₛ₂ gestrichelt). Figur 2, Zeile 3 zeigt die Spannungen U_{c1} bzw. U_{c2} an den Resonanzkondensatoren C1, C2. Das Ersatzschaltbild für einen Gegentaktzweig zeigt Figur 3. Der Eingangsstrom I₀ des Gegentaktwandlers ist durch eine Stromquelle dargestellt. Der Transformator Tr ist durch seine Streuinduktivität L_{S} repräsentiert. Die Spannung U₀ stellt die vom Sekundärkreis aus transformierte Ausgangsspannung dar. Die Beziehungen für die Signale der Resonanzkreise sind der DE 41 20 147 C2 entnehmbar.

Zur Erzeugung des Regelsignals für den Tiefsetzsteller VR ist eine Steuerschaltung St vorgesehen, die einen Pulsbreitenmodulator PBM enthält. Als Steuerkriterien für den Pulsbreitenmodulator PBM werden die Spannungen an Resonanzkondensatoren C1 und C2 herangezogen sowie der Energieaufnahmestrom i_{A} des Tiefsetzstellers VR. Der Energieaufnahmestrom i_{A} wird über den Stromwandler SW erfaßt, gleichgerichtet und einem Widerstand RM zugeführt, der in Serie zu einer Sägezahnspannungsquelle QSZ an den invertierenden Eingang des als Komparator ausgebildeten Pulsbreitenmodulators PBM angeschlossen ist. Der nichtinvertierende Eingang des Pulsbreitenmodulators PBM ist mit dem Ausgang eines Fehlersignalverstärkers FV verbunden, welcher das andere Schaltkriterium - hier die Spannungen an den Resonanzkondensatoren C1, C2 - mit einer Referenzspannung Ur vergleicht. Die Funktionsweise dieser Steuerschaltung St kann der US 5,001,413 entnommen werden. Die Länge des Steuerpulses für das Schaltregler-Stellglied S3 ist demnach von der Höhe des Energieaufnahmestroms i_{A} und der Höhe des Fehlersignals am Ausgang des Fehlersignalverstärkers FV abhängig. Zur Gewinnung des resonanzkondensatorabhängigen Steuerkriteriums ist ein Summiernetzwerk bestehend aus den Widerständen R1, R2, R3, R4, C3 vorgesehen, mittels dessen eine Spannung UCD gewonnen wird, die proportional zur Summe der addierten Spannungen an den Resonanzkondensatoren C1 und C2 ist. Der Kondensator C3 parallel zum Spannungsteiler R3, R4 dient zur Integration der addierten Spannungen.

Anstelle eines Tiefsetzstellers kann dem Gegentaktwandler bei Bedarf auch ein Hochsetzsteller vorgeschaltet werden. Die Schaltzeiten sowie die Schaltungsausführung sind dann entsprechend der bekannten Eigenschaften eines Hochsetzstellers zu ändern. Falls ein einzusetzender Hochsetzsteller nicht sowieso schon eine ausgangsseitige Induktivität besitzt, muß er gegebenenfalls so geändert werden, daß er ausgangsseitig eine Induktivität aufweist.

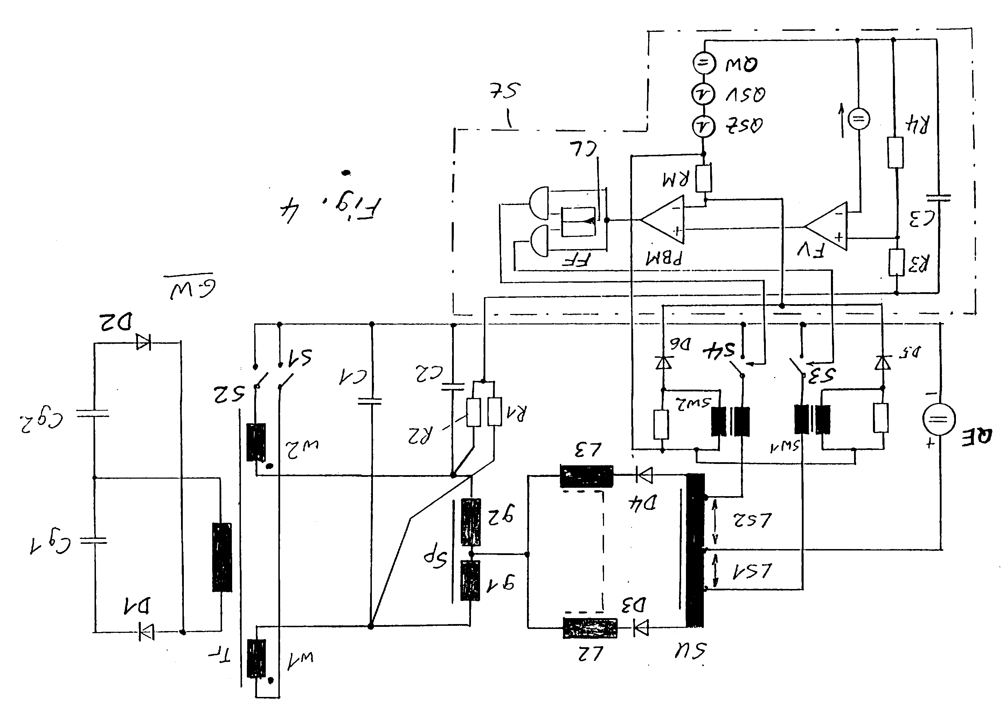

Besonders günstig ist es, einen Hochsetzsteller zu verwenden, wie er in Figur 4 dargestellt ist. Der Hochsetzsteller als Vorregler VR besteht aus einem Sparübertrager SU, zwei Stellgliedern, hier durch den Schalter S3 und S4 dargestellt, Gleichrichtern D3, D4 sowie den Induktivitäten L2 und L3. Im dargestellten Ausführungsbeispiel ist der Wicklungsmittelpunkt des Sparübertragers SU mit dem Pluspol der Eingangsgleichspannungsquelle QE verbunden. Zwischen symmetrisch zum Wicklungsmittelpunkt gelegenen Anzapfungen des Sparübertragers SU und dem Minuspol ist jeweils einer der Schalter S3 bzw. S4 angeordnet. Somit sind die Schalter S3 und S4 jeweils über eine Teilinduktivität LS1 bzw. LS2 des Sparübertragers SU mit der Eingangsgleichspannungsquelle verbunden. Den Sekundärkreis des Hochsetzstellers bilden die Gleichrichter D3 und D4, die jeweils gleichsinnig gepolt an die Wicklungsenden des Sparübertragers SU angeschlossen sind. Die Ausgangsinduktivität des Hochsetzstellers ist hier in die beiden Einzelinduktivitäten L2 und L3 aufgeteilt, die den Gleichrichtern D3 und D4 jeweils in Serie geschaltet sind. Diese Einzelinduktivitäten L2 und L3 sind ausgangsseitig zusammengeschaltet und führen wie beim Ausführungsbeispiel gemäß Fig. 1 zum Mittelpunkt des Spartransformators Sp. Weitere Einzelheiten, insbesondere der Regelung, sind der WO 92/22955 A1 entnehmbar. Neben der Sägezahnspannungsquelle QSZ mit konstanter Maximalamplitude ist hier noch eine Sägezahnspannungsquelle QSV mit von der Eingangsspannung abhängigen Amplitude und eine Gleichspannungsquelle QW vorgesehen, deren Spannung proportional zur Eingangsgleichspannung gewählt ist. Zur Stromauswertung sind hier zwei Strommeßwandler SW1 und SW2 vorgesehen, deren Ausgänge über Dioden D5, D6 zusammengeschaltet sind. Zur Erzeugung der Gegentakt-Steuerpulse für die Schalter S3, S4 sind ein Flip-Flop FF und logische Gatter vorgesehen.

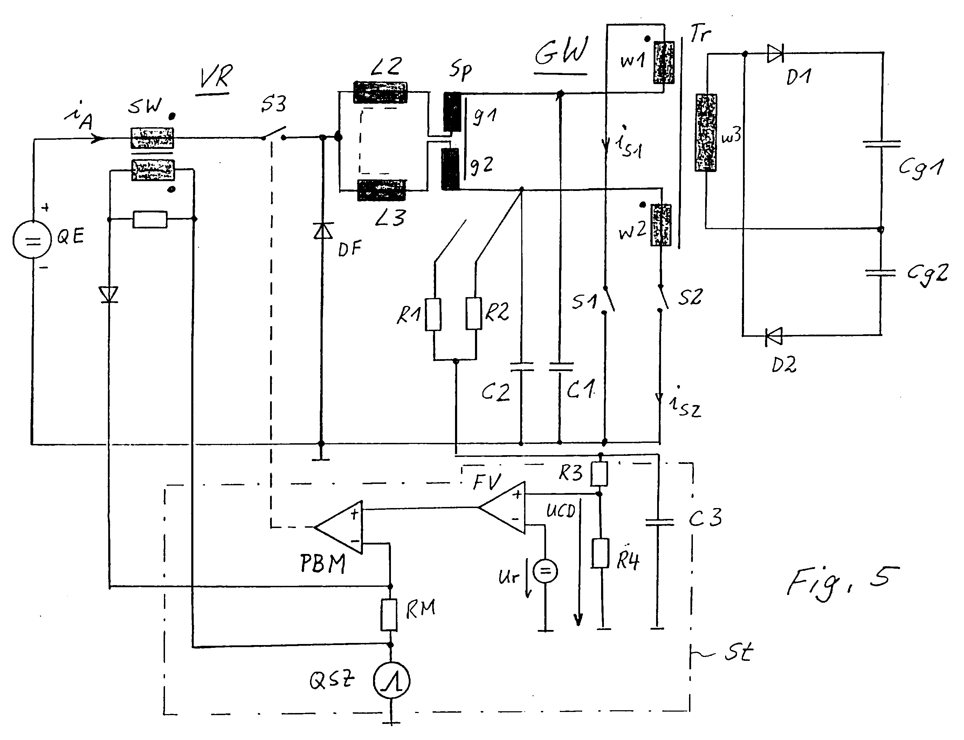

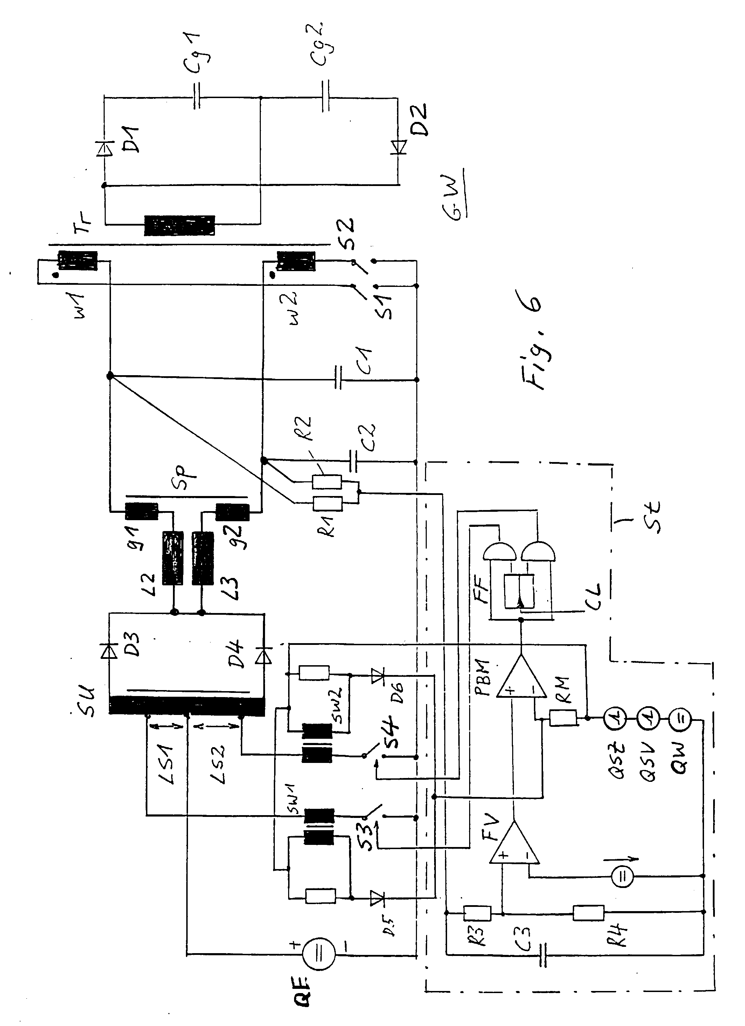

Alternativ zu den in Fig. 1 und Fig. 4 dargestellten Ausführungsbeispielen, wo die beiden Gegentaktwicklungen g1 und g2 des Sparübertragers Sp galvanisch direkt miteinander verbunden sind, können die Gegentaktwicklungen g1 und g2 gemäß den Ausführungsbeispielen nach Fig. 5 und Fig. 6 (Hochsetzsteller) über die Ausgangsinduktivitäten L2 und L3 der jeweiligen Vorregler VR geführt werden. Ihre galvanische Verbindung erfolgt dann über die Serienschaltung der beiden Ausgangsinduktivitäten L2 und L3. Bei dieser Ausgestaltung wird ein eventuell noch auftretender Ausgleichsstrom der Gegentaktzweige zusätzlich über die Induktivitäten L2 und L3 gedämpft.

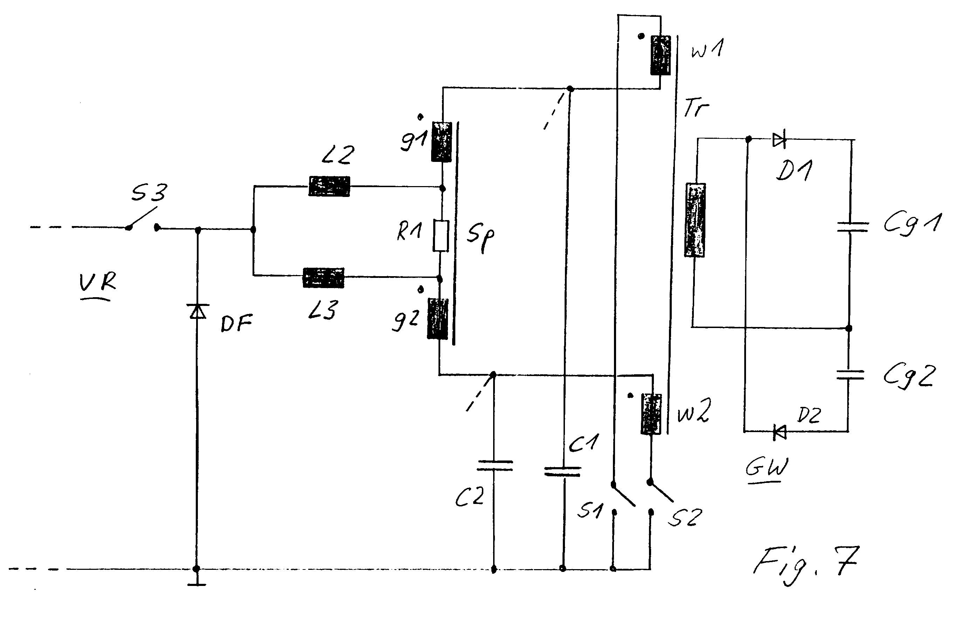

In der Ausgestaltung gemäß Fig. 7 sind die Gegentaktwicklungen g1 und g2 über einen Widerstand R1 galvanisch miteinander verbunden. Der Widerstand R1 stellt somit eine Bedämpfung dar. Eine solche Bedämpfung bringt insbesondere dann Vorteile, wenn der Transformator oder Spartransformator Sp, der die Gegentaktwicklungen g1 und g2 trägt, nicht so dimensioniert ist, daß bei Einschalttransienten dieser Transformator in die Sättigung gelangen kann und - angeregt durch den nachgeschalteten Gegentaktwandler GW - in einen Betriebszustand gelangen kann, wo er von einer Sättigungsgrenze in die andere Sättigungsgrenze umkippt und in diesem unerwünschten Oszillationszustand verharrt.

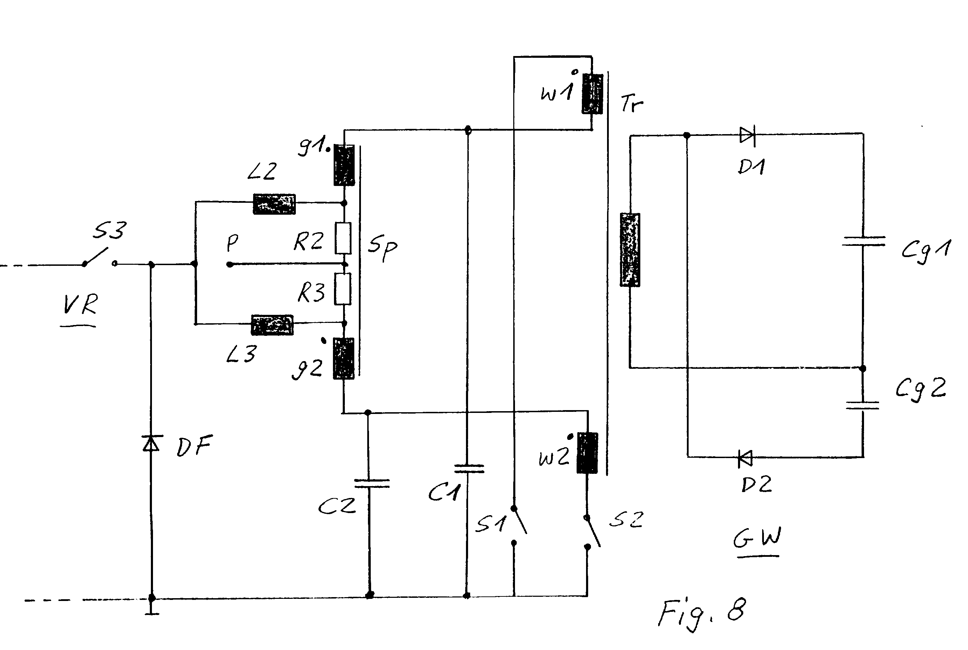

Wird der Widerstand R1 in zwei gleichgroße Widerstände R2, R3 aufgeteilt, so kann am Verbindungspunkt P dieser Widerstände Leistung entnommen werden, ohne daß die Symmetrie gestört wird, d.h. eine ungleichmäßige Belastung der Gegentaktzweige ist nicht möglich (Fig. 8). Der Verbindungspunkt P kann somit als Ausgang für einen Nebenkreis oder als Ausgang für die Regelung des Vorreglers benutzt werden.

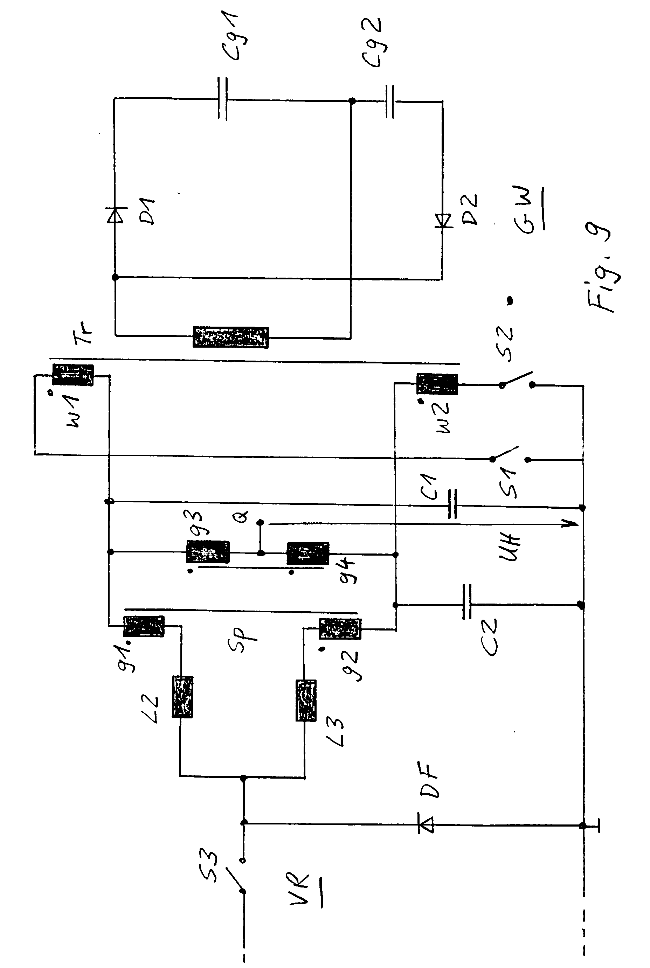

Anstelle der Widerstände R2 und R3 können auch weitere Gegentaktwicklungen g3, g4 vorgesehen sein, die wechselspannungsmäßig eine hochohmige Belastung darstellen und gleichspannungsmäßig eine niederohmige Ankopplung (Fig. 9). Die Gegentaktwicklungen g3 und g4 sind hier in Abweichung zu den bisherigen Ausführungsbeispielen zwischen den zu den Gegentaktzweigen führenden Anschlußenden der Wicklungen g1 bzw. g2 angeschlossen. Am Verbindungspunkt Q dieser vorzugsweise symmetrisch aufgebauten Wicklungen kann ebenfalls Leistung für einen Nebenkreis, z.B. den Heizkreis einer Wanderfeldröhre, entnommen werden und zwar in dieser Ausgestaltung lastunabhängig, d.h. es läßt sich eine konstante Heizspannung UH entnehmen.

## Patentansprüche

1. Anordnung bestehend aus einem Gegentaktwandler (GW) mit mindestens einem Resonanzkondensator (C1, C2) in jedem Gegentaktzweig und einem vorgeschalteten, getakteten Vorregler (VR) der mindestens eine Speicherinduktivität enthalt, dadurch gekennzeichnet, daß zwischen dem Vorregler (VR) und den Gegentaktzweigen des Gegentaktwandlers (GW) zur wechselstrommäßigen Entkopplung der galvanisch direkt oder indirekt verbundenen Gegentaktzweige (C1 w1; C2, w2) eine Drossel, insbesondere in Form eines Spartransformators (Sp), mit Gegentaktwicklungen (g1, g2) vorgesehen ist, wobei die einen Wicklungsenden zu jeweils einem der Gegentaktzweige führen und die anderen Wicklungsenden direkt oder indirekt mit dem Vorregler (VR) verbunden sind.

2. Anordnung nach Anspruch 1, dadurch gekennzeichnet, daß die Gegentaktwicklungen (g1, g2) galvanisch voneinander getrennt ausgeführt sind und daß ihre gegentaktzweigeabgewandten Enden zumindest über Teile (L2, L3) des Vorreglers (VR) galvanisch miteinander verbunden sind.

3. Anordnung nach Anspruch 2, dadurch gekennzeichnet, daß die galvanische Verbindung der Gegentaktwicklungen (g1, g2) über zwei Teilinduktivitäten (L2, L3) des insbesondere als Abwärts- oder Aufwärtssteller ausgebildeten Vorreglers (VR) erfolgt.

4. Anordnung nach einem der Ansprüche 1 bis 3, dadurch gekennzeichnet, daß die Gegentaktwicklungen (g1, g2) mit Dämpfungsmitteln (R1; R2, R3) beschaltet sind.

5. Anordnung nach Anspruch 4, dadurch gekennzeichnet, daß die Dämpfungsmittel (R2, R3) so ausgebildet sind, daß über sie Leistung auskoppelbar ist, die für die Gegentaktzweige des Gegentaktwandler(GW) eine symmetrische Belastung darstellt.

6. Anordnung nach einem der Ansprüche 1 bis 5, dadurch gekennzeichnet, daß an die Gegentaktwicklungen (g1, g2) weitere Gegentaktwicklungen (g3, g4) angeschlossen sind zur Auskopplung von Leistung für einen Nebenkreis.

## Claims

1. Arrangement comprising a push-pull converter (GW) having at least one resonance capacitor (C1, C2) in each push-pull path, and having an upstream, pulsed preregulator (VR) which contains at least one storage inductance, characterized in that an inductor, in particular in the form of an economy transformer (Sp) having push-pull windings (g1, g2), is provided between the preregulator (VR) and the push-pull paths of the push-pull converter (GW) to provide AC decoupling of the push-pull paths (C1 w1; C2, w2) which are connected indirectly or directly in DC terms, the one set of winding ends leading to in each case one of the push-pull paths, and the other set of winding ends being connected directly or indirectly to the preregulator (VR).

2. Arrangement according to Claim 1, characterized in that the push-pull windings (g1, g2) are designed to be DC-isolated from one another, and in that their ends facing away from the push-pull paths are connected to one another in DC terms at least via parts (L2, L3) of the preregulator (VR).

3. Arrangement according to Claim 2, characterized in that the DC connection of the push-pull windings (g1, g2) is produced via two inductance elements (L2, L3) of the preregulator (VR), which is designed in particular as a step-down or step-up controller.

4. Arrangement according to one of Claims 1 to 3, characterized in that the push-pull windings (g1, g2) are connected to damping means (R1; R2, R3).

5. Arrangement according to Claim 4, characterized in that the damping means (R2, R3) are designed such that power can be output via them and represents a balanced load on the push-pull paths of the push-pull converter (GW).

6. Arrangement according to one of Claims 1 to 5, characterized in that further push-pull windings (g3, g4) are connected to the push-pull windings (g1, g2) in order to output power for a secondary circuit.

## Revendications

1. Agencement consistant en un convertisseur push-pull (GW) avec au moins un condensateur de résonance (C1, C2) dans chaque bras symétrique et un prérégulateur (VR) monté en amont, cadencé, qui contient au moins une inductance à accumulation,
caractérisé en ce que
l'on prévoit entre le prérégulateur (VR) et les bras symétriques du convertisseur push-pull (GW) qui servent au découplage en courant alternatif des bras symétriques reliés galvaniquement de façon directe ou indirecte (C1, w1 ; C2, w2), une bobine de choc se présentant en particulier sous la forme d'un transformateur diviseur de tension (Sp) avec des enroulements symétriques (g1, g2) conduisant respectivement à l'un des bras symétriques, et les autres extrémités des enroulements étant reliées directement ou indirectement au prérégulateur (VR).

2. Agencement selon la revendication 1,
caractérisé en ce que
les enroulements symétriques (g1, g2) sont réalisés de façon séparée galvaniquement l'un de l'autre, et leurs extrémités situées à l'opposé des bras symétriques sont reliées l'une à l'autre galvaniquement au moins au moyen des parties (L2, L3) du prérégulateur (VR).

3. Agencement selon la revendication 2,
caractérisé en ce que
la liaison galvanique des enroulements symétriques (g1, g2) a lieu au moyen de deux inductances partielles (L2, L3) du prérégulateur (VR) constitué en particulier sous la forme d'un organe de réglage en aval ou en amont.

4. Agencement selon l'une des revendications 1 à 3,
caractérisé en ce que
les enroulements symétriques (g1, g2) sont branchés avec des moyens d'amortissement (R1, R2, R3).

5. Agencement selon la revendication 4,
caractérisé en ce que
les moyens d'amortissement (R2, R3) sont constitués de telle façon que l'on puisse découpler la puissance grâce à eux, ce qui constitue une charge symétrique pour les bras symétriques du convertisseur push-pull (GW).

6. Agencement selon l'une des revendications 1 à 5,
caractérisé en ce qu'
aux enroulements symétriques (g1, g2) sont raccordés d'autres enroulements symétriques (g3, g4) pour découpler de la puissance pour un circuit auxiliaire.
